# EUROPEAN PATENT SPECIFICATION

(11) **EP 4 592 457 B1**
(45) Date of publication and mention of the grant of the patent: **04.11.2026**
(21) Application number: 22959501.2
(22) Date of filing: 20.09.2022
(51) Int. Cl.: G06V 20/59, G06V 20/56, E02F 9/26, E02F 9/20, G06V 10/40, G06V 10/75, G06V 10/764, G06V 10/46

(54) **SORTING DEVICE**
SORTIERVORRICHTUNG
DISPOSITIF DE TRIAGE

(43) Date of publication of application: 30.07.2025
(73) Proprietor: Pioneer Corporation, Tokyo 113-0021 (JP)
(72) Inventor: ADACHI, Kazufumi, Tokyo 113-0021 (JP); SUZUKI, Manabu, Tokyo 113-0021 (JP)
(74) Representative: Grünecker Patent- und Rechtsanwälte PartG mbB
(86) International application number: PCT/JP2022/035013
(87) International publication number: WO 2024/062537

(56) References cited:
- JP-A- 2002 117 494
- US-A1- 2010 214 411
- US-A1- 2018 187 398
- US-A1- 2019 360 174
- US-A1- 2021 140 146

## Description

### Technical Field

The present invention relates to a determination apparatus for determining the type of a construction machine.

### Background

Drive recorders are becoming more and more common in automobiles and other vehicles, and their use is increasing for purposes such as identifying the causes of traffic accidents and managing driving of employees.

It has also been proposed to install drive recorders in construction machines (also referred to as work machines) such as backhoes (also referred to as hydraulic excavators), bulldozers, cranes, and dump trucks in order to investigate accidents, and the like. For example, Patent Document 1 indicates that a video storage device stores a video captured, during operations of an under carriage, an upper structure, or an attachment, with a camera selected by a camera selection device according to the movement of the under carriage, the upper structure, or the attachment, from among multiple cameras mounted on the upper structure so as to be able to shoot in a different directions.

### Related Art

### Patent Document

The following prior art documents contain teachings relevant to the subject-matter of the application: JP2018053537A, US 2021/140146 A1, US 2019/360174 A1, US 2010/214411 A1 and US 2018/187398 A1.

### Summary of the Invention

### Problem to be Solved by the Invention

For example, it has been proposed to estimate the operation of a construction machine (forward, backward, turning, excavation, and the like) based on information obtained from devices such as a drive recorder and use this information to manage the operating status of the construction machine.

Currently, devices such as drive recorders installed on construction machines are often designed for each type of construction machine, such as a backhoe or bulldozer, and the parameters for estimating the above-described operations are also set for each type. Therefore, devices such as drive recorders installed on construction machines are produced in small quantities and in a wide variety of models, which increases costs and makes distribution complicated. On the other hand, if a standardized model is provided, it is necessary to set the type and parameters when installing the device, which makes the task of installing the device complicated.

An example of problems solved by the present invention is how to prevent operations such as setting from becoming complicated even when the standardized model is provided.

### Solution to Problem

In order to solve the above-described problems, the invention set forth in claim 1 includes:
an image obtaining unit configured to obtain a captured image that is captured by an image-capturing unit installed inside a cab of a construction machine;
a feature point extraction unit configured to extract a feature point inside and outside of the cab from the captured image;
a type determination unit configured to determine a type of the construction machine, based on information about a feature point for each type of construction machines prepared in advance and based on the extracted feature point; and
an identifying unit configured to identify an operation parameter for the image-capturing unit corresponding to the determined type.

The invention set forth in claim 6 is a determination method executed by a determination apparatus configured to determine a type of a construction machine, including:
an image obtaining step of obtaining a captured image that is captured by an image-capturing unit installed inside a cab of the construction machine;
a feature point extracting step of extracting a feature point inside and outside of the cab from the captured image;
a type determining step of determining a type of the construction machine, based on information about a feature point for each type of construction machines prepared in advance and based on the extracted feature point; and
an identifying step of identifying an operation parameter for the image-capturing unit corresponding to the determined type.

The invention set forth in claim 7 is characterized in causing a computer to execute, as a determination program, a determination method according to claim 6.

The invention set forth in claim 8 is characterized in storing the determination program according to claim 7 into a computer-readable recording medium.

### Brief Description of the Drawings

Fig. 1 is a schematic diagram of a system having a determination apparatus and an ascertainment apparatus according to one embodiment of the present invention.
Fig. 2 is a functional configuration diagram of a recorder apparatus illustrated in Fig. 1.
Fig. 3 is a functional configuration diagram of a server apparatus illustrated in Fig. 1.
Fig. 4 is a flowchart of a preprocessing operation of the system illustrated in Fig. 1.
Fig. 5 is a flowchart of an operation during use of the system illustrated in Fig. 1.
Fig. 6 is an example of an installation image.
Fig. 7 is an example of an image in which a window frame portion has been extracted from the installation image illustrated in Fig. 6.

### Detailed Description of the Exemplary Embodiment

A determination apparatus according to one embodiment of the present invention is described below. In the determination apparatus according to one embodiment of the present invention, an image obtaining unit obtains a captured image captured by an image-capturing unit installed in a cab of a construction machine, and a feature point extraction unit extracts feature points inside and outside the cab from the captured image. A type determination unit determines the type of the construction machine based on information about feature points for each type of construction machine prepared in advance and the extracted feature points, and identifies operation parameters for the image-capturing unit corresponding to the type determined by the identifying unit. In this case, the type of the construction machine can be automatically determined based on the image captured by the image-capturing unit, and appropriate operation parameters can be identified. Therefore, this prevents operations such as setting from becoming complicated even when the standardized model is provided.

The information about the feature points may be the feature points of the seat installed in the cab or the window frame of the cab. The seat and the window frame of the cab are portions that differ greatly depending on the type of the construction machine, and can be more accurately determined when determining the type.

Furthermore, in the information about the feature point, each type of construction machines is further subdivided into models. In this case, it is possible to identify manufacturers, models, and the like, and more precise operation parameters can be used.

The operation parameters are used to determine an operation of the construction machine. That is, as described above, the operation parameters can be used to identify operations such as advancement and excavation, and the operating status of the construction machine can be grasped.

Also, an image-capturing apparatus may be configured to include the above-described determination apparatus, an image-capturing unit, and a recording unit for recording the captured image obtained by the image obtaining unit. In this case, a device installed in a construction machine, such as a drive recorder, can automatically determine the type of the construction machine and identify appropriate operation parameters.

Also, an information processing apparatus may be configured to include a feature point obtaining unit configured to obtain the feature points extracted by the above-described determination apparatus, and an accumulation unit configured to store the obtained feature points. In this case, it is possible to easily respond to new models, for example, by storing feature points in a server apparatus.

Also, a determination method according to one embodiment of the present invention includes an image obtaining step of obtaining a captured image that is captured by an image-capturing unit installed inside a cab of the construction machine and a feature point extracting step of extracting a feature point inside and outside of the cab from the captured image. The determination method further includes a type determining step of determining a type of the construction machine, based on information about a feature point for each type of construction machines prepared in advance and based on the extracted feature point, and an identifying step of identifying an operation parameter for the image-capturing unit corresponding to the determined type. In this case, the type of the construction machine can be automatically determined based on the image captured by the image-capturing unit, and appropriate operation parameters can be identified. Therefore, this prevents operations such as setting from becoming complicated even when the standardized model is provided.

Also, the above-described determination method may be executed by a computer as a determination program. In this case, using a computer, the type of the construction machine can be automatically determined based on an image captured by an image-capturing unit, and appropriate operation parameters can be identified.

The above-described determination program may be stored in a computer-readable storage medium. In this case, the program can be distributed as a standalone program in addition to being incorporated into a device, and version upgrades can be easily performed. Embodiment

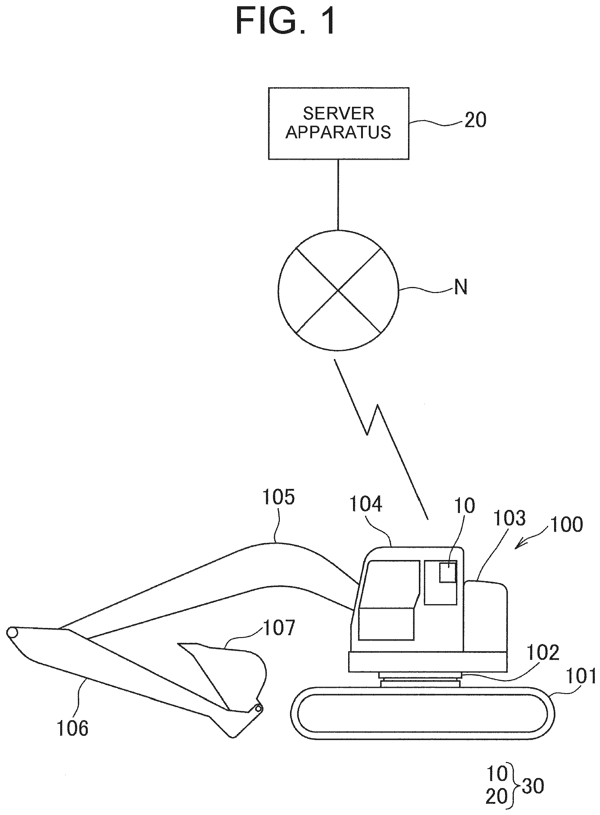

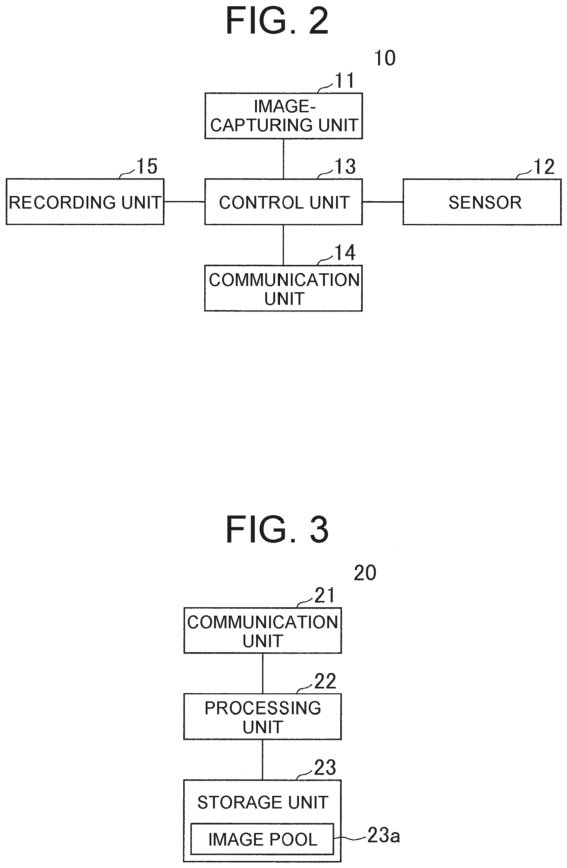

A determination apparatus and an ascertainment apparatus according to one embodiment of the present invention is described with reference to Figs. 1 and 2. Fig. 1 is a schematic diagram of a system having a determination apparatus and an ascertainment apparatus according to the present embodiment.

A system 30 illustrated in Fig. 1 includes a recorder apparatus 10 and a server apparatus 20. The recorder apparatus 10 is installed in a cab 104 (also called a pilot cabin, cockpit, or driver's room) of a construction machine 100. The recorder apparatus 10 and the server apparatus 20 are capable of communicating with each other via a network N such as the Internet or a public line network.

In the present embodiment, the construction machine 100 is described as a backhoe, but it may be another construction machine such as a bulldozer, a crane vehicle, or a dump truck. The construction machine 100 illustrated in Fig. 1 has an upper structure 103 mounted on a crawler-type under carriage 101 via a turning mechanism 102 so as to be freely rotatable around a turning axis. The upper structure 103 is provided with a cab 104 on its front left side, and an excavation attachment consisting of a boom 105, an arm 106, and a bucket 107 in its front center. The cab 104 is provided with a seat and the like for an operator (also referred to as a driver) to sit on, and windows are provided on the front, sides, and top to allow the operator to see outside.

The recorder apparatus 10 is equipped with an image-capturing unit (camera) as described below, and captures images of a range including the area substantially forward from inside the cab 104 (the direction in which the operator faces forward when seated in a seat). Fig. 2 is a functional configuration diagram of the recorder apparatus 10. The recorder apparatus 10 includes an image-capturing unit 11, a sensor 12, a control unit 13, a communication unit 14, and a recording unit 15.

The image-capturing unit 11 is composed of, for example, a camera and has an image pickup element, optical components, and the like. As described above, the image-capturing unit 11 captures an image of a range including the substantially forward direction from within the cab 104. The image data captured by the image-capturing unit **11** is output to the control unit 13.

The sensor 12 includes, for example, a three-axis acceleration sensor, a GPS (Global Positioning System) receiver, and the like. The three-axis acceleration sensor can detect vibrations acting on the recorder apparatus 10. In addition, the GPS receiver can obtain information about the current position and time.

The control unit 13 is composed of, for example, a microprocessor having a CPU (Central Processing Unit), memory, and the like. The control unit 13 is responsible for the overall control of the recorder apparatus 10. In addition, the control unit 13 transmits image data captured by the image-capturing unit 11, when the recorder apparatus 10 is installed or started up, to the server apparatus 20 via the communication unit 14.

The communication unit 14 has, for example, a wireless communication circuit and an antenna, and wirelessly communicates with the network N. By wirelessly communicating with the network N, the communication unit 14 communicates with the server apparatus and transmits image data captured by the image-capturing unit 11 and the like.

The recording unit 15 is composed of, for example, a memory card slot and a memory card. The recording unit 15 sequentially records image data captured by the image-capturing unit 11 onto the memory card. That is, the recording unit 15 can record video images of the construction machine 100 during operation. Note that, in addition to the image data, information detected by the sensor 12 may also be recorded onto the memory card in association with the image data. The recording unit 15 is not limited to a memory card and may be a non-volatile internal memory or the like.

The server apparatus 20 is composed of a generally-available server computer. Fig. 3 is a functional configuration diagram of the server apparatus 20. The server apparatus 20 includes a communication unit 21, a processing unit 22, and a storage unit 23.

The communication unit 21 is composed of, for example, a computer network interface, and the like. The communication unit 21 receives image data and the like transmitted from the recorder apparatus 10.

The processing unit 22 is composed of, for example, a microprocessor having a computer CPU, memory, and the like. As is described later, the processing unit 22 determines the type of construction machine to which the recorder apparatus 10 is installed based on the image data acquired by the communication unit 21. Also, the processing unit 22 determines whether the recorder apparatus 10 is properly installed based on the image data acquired by the communication unit 21, as is described later.

The storage unit 23 is configured with a non-volatile storage medium such as a hard disk, for example. The storage unit 23 stores various programs and data executed by the processing unit 22. In the embodiment, the storage unit 23 also stores an image pool 23a.

The image pool 23a is a pool (accumulation) of images, for each type and model, showing information about feature points of the construction machine in the range captured by the image-capturing unit 11. That is, the image pool 23a is information about feature points for each type and model of the construction machine that has been prepared in advance. In the present embodiment, the information about the feature points is an image (feature point image) that extracts the window frame portion of the cab 104. The feature point image may be the entire window frame or only the columnar pillar portion. Alternatively, the information about the feature points may include only the approximately horizontal portion, but a portion that can be identified for each model is preferable.

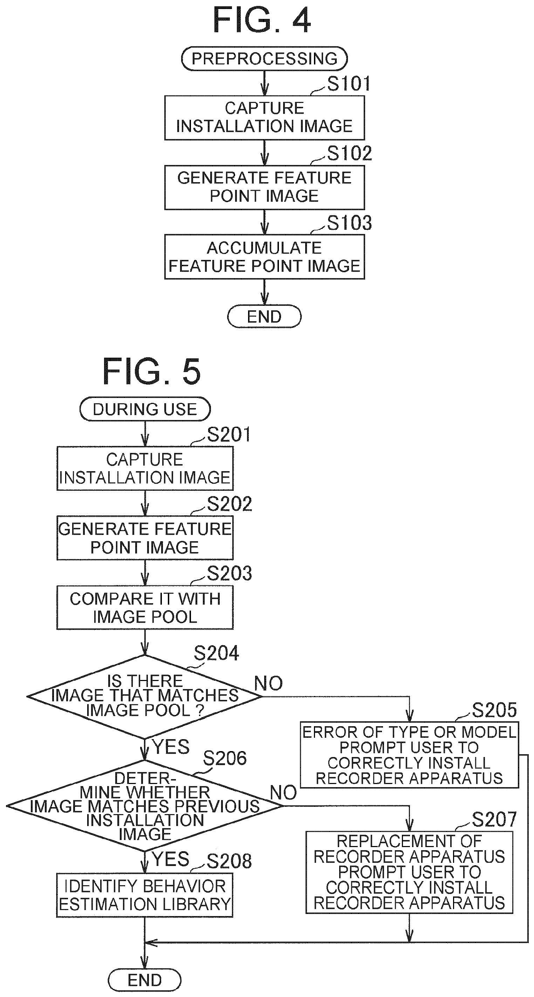

Next, an operation (determination method and ascertainment method) of the system 30 having the above-described configuration is described with reference to the flowcharts of Figs. 4 and 5. The flowcharts of Figs. 4 and 5 can be configured as a program executed by a computer having a CPU or the like to form a determination program and an ascertainment program.

Fig. 4 is a flowchart of the preprocessing. The preprocessing is a process for generating images to be pooled (stored) in the image pool 23a described above. First, an installation image is captured in the recorder apparatus 10 (step S101). The installation image is an image captured by the image-capturing unit 11 after the recorder apparatus 10 is installed to the construction machine 100. The captured installation image is transmitted to the server apparatus 20 via the network N.

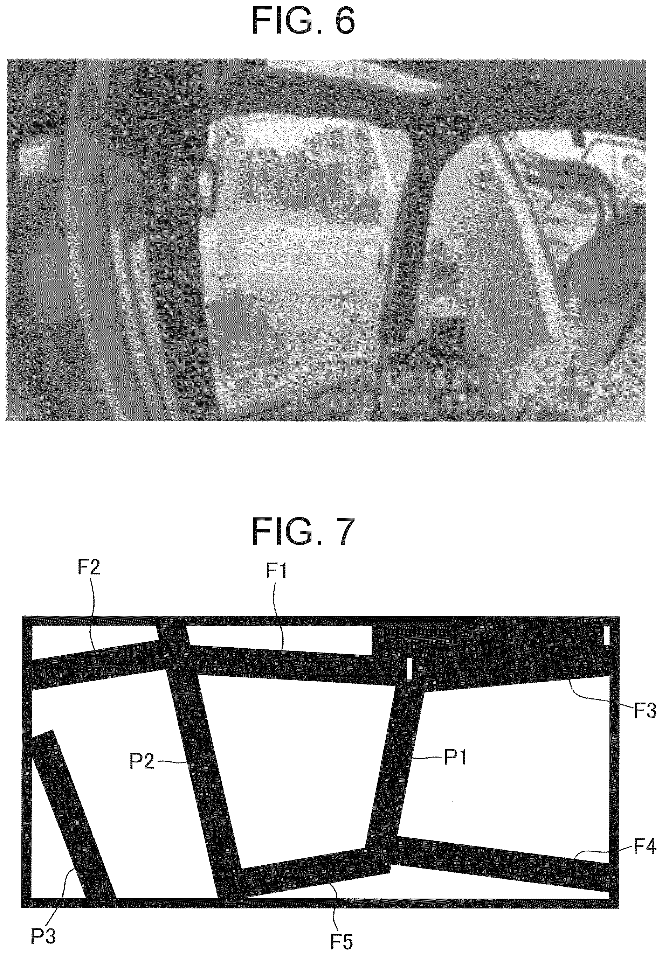

Next, in the processing unit 22 of the server apparatus 20, a feature point image is generated from the installation image (step S102). The feature point image corresponds to information about the feature points of the construction machine described above. Here, the feature point image is described with reference to Figs. 6 and 7.

Fig. 6 illustrates an image captured by the recorder apparatus 10 mounted on the upper left rear part of the seat inside the cab 104 of a backhoe of a certain construction machine manufacturer, which is an example of the above-described installation image. When the processing unit 22 acquires the installation image, the processing unit 22 extracts the window frame portion from the installation image. Fig. 7 is an example of an image in which the window frame portion is extracted from Fig. 6. Fig. 7 is a simplified image for ease of explanation. In Fig. 7, the window frame is composed of members P1 to P3 extending in a substantially vertical direction and members F1 to F5 extending in a substantially horizontal direction.

The processing unit 22 generates the image illustrated in Fig. 7 from the image illustrated in Fig. 6 by a well-known method such as a machine learning model or template matching. That is, in this embodiment, the window frame portion of the cab 104 becomes the feature point. Note that the feature point is not limited to the entire window frame in the imaging range, but may be only the members P1 to P3 extending in a substantially vertical direction, or only the members F1 to F5 extending in a substantially horizontal direction. Furthermore, the feature point may be only the portions that have a characteristic shape according to the type or model of the construction machine, such as only the members P1 and P2 in the front, or only the member F5 at the top edge of the window on the side as seen from the operator.

Also, in the present embodiment, the feature point is the window frame or a portion thereof, but the feature point may be a seat installed in the cab 104. The feature point may be a portion of the seat. Alternatively, the feature point may be a portion outside the cab that has a characteristic shape according to the construction machine, such as an excavation attachment that can be seen from the window. In other words, the feature point may be inside or outside the cab 104. In a drive recorder installed on a general automobile, the window frame and the like are not included in the imaging range, but in the case of a construction machine, the window frame and the like are often included in the imaging range, so it is effective to use the window frame as the feature point.

Next, the processing unit 22 accumulates the feature point image generated in step S102 into the image pool 23a (step S103). Information about the type (backhoe, bulldozer, and the like), model (manufacturer name, model number, and the like) of the construction machine, and the installation angle of the recorder apparatus 10 are added to the generated feature point image when accumulating the feature point image. The information about the type, model, and installation angle may be obtained from the recorder apparatus 10 or may be added manually.

In this embodiment, preprocessing is performed by the server apparatus 20, but preprocessing may be performed by another apparatus, and the results of the preprocessing may be stored in the storage unit 23 as the image pool 23a.

Next, the operation during use is described with reference to the flowchart in Fig. 5. "Operation during use" here refers to normal use after the recorder apparatus 10 is installed in the server apparatus 20 after preprocessing is completed and the image pool 23a is formed in the server apparatus 20.

First, an installation image is captured in the recorder apparatus 10 (step S201). In step S201, similar to step S101, the captured installation image is transmitted to the server apparatus 20 via the network N. In the server apparatus 20, the communication unit 21 receives the installation image. That is, the communication unit 21 functions as an image obtaining unit that obtains the captured image captured by the image-capturing unit 11 installed in the cab 104 of the construction machine.

Next, in the processing unit 22 of the server apparatus 20, a feature point image is generated from the installation image (step S202). In step S202, similar to step 102, an image including a window frame portion extracted from the installation image is generated as a feature point image. That is, the processing unit 22 functions as a feature point extraction unit that extracts feature points of the cab 104 from the captured image.

Next, the processing unit 22 compares the feature point image generated in step S202 with the image group stored in the image pool 23a (step S203). Then, the processing unit 22 determines whether or not there is a matching image as a result of comparing the feature point image with the image group stored in the image pool 23a (step S204). In other words, the processing unit 22 functions as an installation state determination unit that determines whether the installation state of the image-capturing unit 11 is appropriate based on the image pool 23a (the information about the feature points for each type and model of a construction machine prepared in advance) and the extracted feature point image.

If there is no matching image (step S204; NO), the processing unit 22 issues a notice prompting correct installation as the type or model is different (step S205). That is, the processing unit 22 determines that the installation state is "NO". The image pool 23a stores feature point images of the type (backhoe, bulldozer, and the like) and model (XX company model number, and the like) of the construction machine to which the recorder apparatus 10 corresponds. If there is no matching image in the image pool 23a, it can be determined that the recorder apparatus 10 is not installed to the corresponding construction machine, and therefore the processing unit 22 prompts correct installation.

As a method for urging correct installation, installation defect possibility information indicating that the installation is incorrect may be transmitted to the recorder device 10 via the communication unit 21 to cause the recorder apparatus 10 to display or output a sound, or the installation defect possibility information may be sent to a preregistered email address or social media via the communication unit 21. In other words, the communication unit 21 functions as an installation notification unit that notifies when the installation state determination unit determines that the installation state is not correct.

In step S205, not only differences in type or model but also failure of installation in the correct position are also taken into consideration. For example, if, although instructions state that the recorder apparatus 10 should be installed at the upper left rear of the seat, the recorder apparatus 10 is installed in a different position, then, the feature point image is different and does not match the image group stored in image pool 23a. In such cases, the recorder apparatus 10 can be determined to be installed incorrectly and the user can be prompted to install the recorder apparatus 10 correctly.

On the other hand, if a matching image is found (step S204; YES), the processing unit 22 determines whether the image matches the previous installation image (step S206). The previous installation image refers to an image captured and stored the last time the recorder apparatus 10 was started and step S201 was executed.

If it does not match the previous installation image (step S206; NO), the processing unit 22 issues a notification that a replacement has occurred and prompts the user to perform a correct installation (step S207). In other words, if an image different from that at the previous startup has been obtained, it is considered that there is a high possibility that the recorder apparatus 10 has been replaced in order to reuse it in multiple construction machines. When a replacement occurs, the adhesive strength of the double-sided tape of the mounting member of the recorder apparatus 10 decreases, which may cause the recorder apparatus 10 to fall, so the recorder apparatus 10 prompts the user to perform a correct installation. In other words, the communication unit 21 functions as a replacement notification unit that issues a notification when the replacement determination unit determines that a replacement has occurred.

As a method for prompting correct installation, similar to step S205, installation defect possibility information indicating that the installation is incorrect may be transmitted to the recorder device 10 via the communication unit 21 to cause the recorder apparatus 10 to display or output a sound, or the installation defect possibility information may be sent to a preregistered email address or social media via the communication unit 21. It is preferable that the installation defect possibility information indicates an occurrence of replacement, unlike step S205.

On the other hand, if the images match (step S206; YES), the processing unit 22 identifies a behavior estimation library (step S208). The behavior estimation library is a parameter set of a program that can estimate the operation of the construction machine using the data (acceleration data, and the like) obtained by the recorder apparatus 10. That is, the behavior estimation library is used to determine the operation of a construction machine, with which it is possible to estimate operations such as forward movement and excavation, and obtain information about the operation other than the image. The behavior estimation library is set for each type of construction machine, such as a backhoe or a bulldozer. Therefore, a behavior estimation library corresponding to the type indicated by the image in the image pool that matched in step S204 is specified.

It should be noted that the server apparatus 20 only needs to identify at least the behavior estimation library, and analysis using the behavior estimation library can be performed by another server or the like.

In step S208, the installation image obtained in step S201 is stored (recorded) in the storage unit 23 or the like as the previous installation image to be used in step S206. In other words, the image for which steps up to step S208 are executed is an image with neither difference in type or model nor occurrence of replacement, and the image can be said to be an image showing correct installation, so the image is stored as a reference image for the next startup. In other words, the processing unit 22 functions as a feature point image recording unit that records the feature point as a feature point image when the installation state is determined to be appropriate.

As is clear from the above description, steps S204, S206 determine whether the installation state of the image-capturing unit 11 is appropriate. Then, according to steps S204 and S206, the processing unit 22 functions as a type determination unit that determines the type of the construction machine based on the image pool 23a (the information about the feature points for each type of construction machine prepared in advance) and the extracted feature point image. Then, according to step S208, the processing unit 22 functions as an identifying unit that identifies a behavior estimation library (operation parameters) for the image-capturing unit **11** corresponding to the determined type.

According to the flowchart of Fig. 5, step S201 functions as an image obtaining step, step S202 functions as a feature point extracting step, steps S204, S206 function as a type determining step, and step S208 functions as an identifying step. Furthermore, steps S204, S206 function as an installation state ascertainment step.

According to the present embodiment, the server apparatus 20 causes the recorder apparatus 10 to obtain an installation image that is captured by the image-capturing unit 11 installed inside the cab 104 of the construction machine, and causes the processing unit 22 to extract a feature point image of the cab 104 from the installation image. Then, the processing unit 22 determines a type of the construction machine, based on an image pool 23a prepared in advance and based on the feature point image, and identifies a behavior estimation library for the recorder apparatus 10 corresponding to the determined type. In this case, the type of the construction machine can be automatically determined based on the image captured by the image-capturing unit 11, and the behavior estimation library can be identified. Therefore, this prevents operations such as setting from becoming complicated even when the standardized model is provided. Furthermore, since the behavior estimation library corresponding to the correct construction machine type can be used, a decrease in the accuracy of behavior estimation can be prevented.

The feature point is the window frame of cab 104. The window frame of the cab 104 is a portion that differs greatly depending on the type of construction machine, and can be more accurately identified when identifying the type.

In addition, the images stored in the image pool 23a are not limited to images in units of types, but are also subdivided by model. It is possible to specify each manufacturer or model, and the like, making it possible to subdivide the behavior estimation library more finely than by the types.

In addition, the server apparatus 20 causes the recorder apparatus 10 to obtain an installation image that is captured by the image-capturing unit 11 installed inside the cab 104 of the construction machine, and causes the processing unit 22 to extract a feature point image of the cab 104 from the installation image. Then, the processing unit 22 determines whether the installation state of the image-capturing unit 11 is appropriate, based on an image pool 23a prepared in advance and based on the feature point image. In this case, based on the image captured by the image-capturing unit 11, it can be determined whether the image-capturing unit 11 is installed correctly.

Moreover, when the processing unit 22 determines that the installation state is inappropriate, information indicating the notification is sent via the communication unit 21. In this case, if the installation state is inappropriate, the user can be notified and prompted to install it correctly.

In addition, when the processing unit 22 determines the installation state is appropriate, the processing unit 22 saves the feature point as a feature point image, and when the feature point extracted from the newly acquired installation image does not match the saved feature point image, the processing unit 22 determines that a replacement of the recorder apparatus 10 has occurred. In this case, it is possible to detect the occurrence of replacement of the recorder apparatus 10 based on the installation image. For example, this can prevent the image-capturing unit from falling off, which may occur when the adhesive strength of the double-sided tape of the mounting member decreases due to the replacement.

In addition, when the processing unit 22 determines that a replacement has occurred, the processing unit 22 transmits information indicating the notification via the communication unit 21. In this case, it is possible to prompt the user to take measures such as replacing the double-sided tape or mounting members to prevent the image-capturing unit from, e.g., falling off.

In addition, for the previous installation image described above, further subdivided images may be generated for each installation angle of the recorder apparatus 10 (the image-capturing unit 11). The recorder apparatus 10 (the image-capturing unit 11) may be allowed to change the installation angle within a specified range from the standard installation angle. For example, when it is determined in step S208 that the image is to be used as the previous installation image, multiple images are generated with the installation angle changed within the allowable range, and these multiple images are treated as the previous installation images (group). In this case, the installation state is not determined as inappropriate if the angle has been adjusted by the next time without replacement of the recorder apparatus 10. Therefore, it is possible to make a determination that is more in line with the actual situation.

In addition, the images subdivided by installation angle may be used not only for determining the installation angle but also for determining the type and model of the construction machine in step S204. By using the images when determining the type and model of the construction machine, it is possible to prevent the type or model from being mistakenly determined to be different when the angle is changed.

The images subdivided for each of the above-described installation angles are preferably automatically generated from the installation image by the processing unit 22. By generating them automatically, it is not necessary to actually change the installation angle to obtain the image, and this can save the user time and effort.

Also, feature point images subdivided for each angle may be stored in the image pool 23a. In this case, it is possible to generate a feature point image for each angle only once, and it is not necessary to generate images within the angle range from the previous installation image every time.

In the above embodiment, the determination apparatus and the ascertainment apparatus coexist, but only one of the functions may be provided. In this case, when the determination apparatus is configured to include an image obtaining unit, a feature point extraction unit, a type determination unit, and an identifying unit, the information about the feature points may be information about feature points for each type of construction machines, and does not have to be subdivided for each model.

In addition, in the above-described configuration, images captured by the recorder apparatus 10 is transmitted to the server apparatus 20, which determines the type and whether the installation state is appropriate. Alternatively, the control unit 13 of the recorder apparatus 10, for example, may determine the type and whether the installation state is appropriate. In this case, the image pool 23a may be downloaded in advance via the network, or may be obtained from a memory card, and the like. By configuring the recorder apparatus 10 to determine the type and whether the installation state is appropriate, it is possible to perform the type determination and the installation state ascertainment even in an environment where it is not possible to connect to a network.

In the above-described configuration, the server apparatus 20 generates the image pool 23a and determines the type and whether the installation state is appropriate, but the image pool 23a may be generated by a different server apparatus. That is, an information processing apparatus may be provided that includes a feature point obtaining unit that obtains feature points and an accumulation unit that accumulates the obtained feature points. In this case, it is possible to easily respond to new models, for example, by accumulating feature points in the server apparatus.

Furthermore, the present invention is not limited to the above-mentioned embodiment.

The scope of the application is given by the appended set of claims.

### List of Reference Signs

10 recorder apparatus
11 image-capturing unit
15 recording unit
20 server apparatus (determination apparatus, ascertainment apparatus)
21 communication unit (image obtaining unit, feature point obtaining unit, installation notification unit, replacement notification unit)
22 processing unit (feature point extraction unit, type determination unit, identifying unit, installation state determination unit, feature point image recording unit, replacement determination unit)
23 storage unit (accumulation unit)
23a image pool (information about feature points for each type of construction machine)
100 construction machine
104 cab

## Claims

1. A determination apparatus (20) comprising:
an image obtaining unit (21) configured to obtain a captured image that is captured by an image-capturing unit (11) installed inside a cab (104) of a construction machine (100);
a feature point extraction unit (22) configured to extract a feature point inside and outside of the cab (104) from the captured image;
a type determination unit (22) configured to determine a type of the construction machine (100), based on information (23a) about a feature point for each type of construction machines (100) prepared in advance and based on the extracted feature point; and
an identifying unit (22) configured to identify an operation parameter for the image-capturing unit (11) corresponding to the determined type.

2. The determination apparatus (20) according to claim 1, wherein the information (23a) about the feature point is a feature point of a seat installed in the cab (104) or a window frame of the cab (104).

3. The determination apparatus (20) according to claim 1, wherein in the information (23a) about the feature point, each type of construction machines (100) is further subdivided into models.

4. The determination apparatus (20) according to claim 1, wherein the operation parameter is used to determine an operation of the construction machine (100).

5. An image-capturing apparatus comprising:
the determination apparatus (20) according to any one of claims 1 to 4;
the image-capturing unit (11); and
a recording unit (15) configured to record the captured image obtained by the image obtaining unit (11).

6. An information processing apparatus comprising:
a feature point obtaining unit (21) configured to obtain the feature point extracted by the determination apparatus (20) according to any one of claims 1 to 4; and
an accumulation unit (23) configured to accumulate the obtained feature point.

7. A determination method executed by a determination apparatus (20) configured to determine a type of a construction machine (100), comprising:
an image obtaining step (S201) of obtaining a captured image that is captured by an image-capturing unit (11) installed inside a cab (104) of the construction machine (100);
a feature point extracting step (S202) of extracting a feature point inside and outside of the cab (104) from the captured image;
a type determining step (S204, S206) of determining a type of the construction machine (100), based on information (23a) about a feature point for each type of construction machines (100) prepared in advance and based on the extracted feature point; and
an identifying step (S208) of identifying an operation parameter for the image-capturing unit (11) corresponding to the determined type.

8. A determination program for causing a computer to execute a determination method according to claim 7.

9. A computer-readable recording medium storing the determination program according to claim 8.

## Patentansprüche

1. Bestimmungsvorrichtung (20), umfassend:
eine Bildgewinnungseinheit (21), die dazu eingerichtet ist, ein erfasstes Bild zu gewinnen, das von einer Bilderfassungseinheit (11) erfasst wird, die innerhalb einer Kabine (104) einer Baumaschine (100) installiert ist;
eine Merkmalspunkt-Extraktionseinheit (22), die dazu eingerichtet ist, einen Merkmalspunkt innerhalb und außerhalb der Kabine (104) aus dem erfassten Bild zu extrahieren;
eine Typbestimmungseinheit (22), die dazu eingerichtet ist, einen Typ der Baumaschine (100) auf Grundlage von im Voraus vorbereiteten Informationen (23a) über einen Merkmalspunkt für jeden Typ von Baumaschinen (100) und auf Grundlage des extrahierten Merkmalspunkts zu bestimmen; und
eine Identifizierungseinheit (22), die dazu eingerichtet ist, einen Betriebsparameter für die Bilderfassungseinheit (11) zu identifizieren, der dem bestimmten Typ entspricht.

2. Bestimmungsvorrichtung (20) nach Anspruch 1, wobei der Merkmalspunkt in den Informationen (23a) über den Merkmalspunkt ein Merkmalspunkt eines in der Kabine (104) installierten Sitzes oder eines Fensterrahmens der Kabine (104) ist.

3. Bestimmungsvorrichtung (20) nach Anspruch 1, wobei in den Informationen (23a) über den Merkmalspunkt jeder Typ von Baumaschinen (100) weiter in Modelle unterteilt ist.

4. Bestimmungsvorrichtung (20) nach Anspruch 1, wobei der Betriebsparameter verwendet wird, um einen Betrieb der Baumaschine (100) zu bestimmen.

5. Bilderfassungsvorrichtung, umfassend:
die Bestimmungsvorrichtung (20) nach einem der Ansprüche 1 bis 4;
die Bilderfassungseinheit (11); und
eine Aufzeichnungseinheit (15), die dazu eingerichtet ist, das von der Bildgewinnungseinheit (11) gewonnene erfasste Bild aufzuzeichnen.

6. Informationsverarbeitungsvorrichtung, umfassend:
eine Merkmalspunkt-Gewinnungseinheit (21), die dazu eingerichtet ist, den von der Bestimmungsvorrichtung (20) nach einem der Ansprüche 1 bis 4 extrahierten Merkmalspunkt zu gewinnen; und
eine Akkumulationseinheit (23), die dazu eingerichtet ist, den gewonnenen Merkmalspunkt zu akkumulieren.

7. Bestimmungsverfahren, das von einer Bestimmungsvorrichtung (20) ausgeführt wird, die dazu eingerichtet ist, einen Typ einer Baumaschine (100) zu bestimmen, umfassend:
einen Bildgewinnungsschritt (S201) zum Gewinnen eines erfassten Bildes, das von einer Bilderfassungseinheit (11) erfasst wird, die innerhalb einer Kabine (104) der Baumaschine (100) installiert ist;
einen Merkmalspunkt-Extraktionsschritt (S202) zum Extrahieren eines Merkmalspunkts innerhalb und außerhalb der Kabine (104) aus dem erfassten Bild;
einen Typbestimmungsschritt (S204, S206) zum Bestimmen eines Typs der Baumaschine (100) auf Grundlage von im Voraus vorbereiteten Informationen (23a) über einen Merkmalspunkt für jeden Typ von Baumaschinen (100) und auf Grundlage des extrahierten Merkmalspunkts; und
einen Identifizierungsschritt (S208) zum Identifizieren eines Betriebsparameters für die Bilderfassungseinheit (11), der dem bestimmten Typ entspricht.

8. Bestimmungsprogramm zum Veranlassen eines Computers, ein Bestimmungsverfahren nach Anspruch 7 auszuführen.

9. Computerlesbares Aufzeichnungsmedium, auf dem das Bestimmungsprogramm nach Anspruch 8 gespeichert ist.

## Revendications

1. Appareil de détermination (20) comprenant :
une unité d'obtention d'image (21) configurée pour obtenir une image capturée qui est capturée par une unité de capture d'image (11) installée à l'intérieur d'une cabine (104) d'un engin de chantier (100) ;
une unité d'extraction de point caractéristique (22) configurée pour extraire, à partir de l'image capturée, un point caractéristique à l'intérieur et à l'extérieur de la cabine (104) ;
une unité de détermination de type (22) configurée pour déterminer un type de l'engin de chantier (100), sur la base d'informations (23a) relatives à un point caractéristique pour chaque type d'engins de chantier (100), préparées à l'avance, et sur la base du point caractéristique extrait ; et
une unité d'identification (22) configurée pour identifier un paramètre de fonctionnement pour l'unité de capture d'image (11), correspondant au type déterminé.

2. Appareil de détermination (20) selon la revendication 1, dans lequel le point caractéristique dans les informations (23a) relatives au point caractéristique est un point caractéristique d'un siège installé dans la cabine (104) ou d'un cadre de fenêtre de la cabine (104).

3. Appareil de détermination (20) selon la revendication 1, dans lequel, dans les informations (23a) relatives au point caractéristique, chaque type d'engins de chantier (100) est en outre subdivisé en modèles.

4. Appareil de détermination (20) selon la revendication 1, dans lequel le paramètre de fonctionnement est utilisé pour déterminer un fonctionnement de l'engin de chantier (100).

5. Appareil de capture d'image comprenant :
l'appareil de détermination (20) selon l'une quelconque des revendications 1 à 4 ;
l'unité de capture d'image (11) ; et
une unité d'enregistrement (15) configurée pour enregistrer l'image capturée obtenue par l'unité d'obtention d'image (11).

6. Appareil de traitement d'informations comprenant :
une unité d'obtention de point caractéristique (21) configurée pour obtenir le point caractéristique extrait par l'appareil de détermination (20) selon l'une quelconque des revendications 1 à 4 ; et
une unité d'accumulation (23) configurée pour accumuler le point caractéristique obtenu.

7. Procédé de détermination exécuté par un appareil de détermination (20) configuré pour déterminer un type d'un engin de chantier (100), comprenant :
une étape d'obtention d'image (S201) consistant à obtenir une image capturée qui est capturée par une unité de capture d'image (11) installée à l'intérieur d'une cabine (104) de l'engin de chantier (100) ;
une étape d'extraction de point caractéristique (S202) consistant à extraire, à partir de l'image capturée, un point caractéristique à l'intérieur et à l'extérieur de la cabine (104) ;
une étape de détermination de type (S204, S206) consistant à déterminer un type de l'engin de chantier (100), sur la base d'informations (23a) relatives à un point caractéristique pour chaque type d'engins de chantier (100), préparées à l'avance, et sur la base du point caractéristique extrait ; et
une étape d'identification (S208) consistant à identifier un paramètre de fonctionnement pour l'unité de capture d'image (11), correspondant au type déterminé.

8. Programme de détermination destiné à amener un ordinateur à exécuter un procédé de détermination selon la revendication 7.

9. Support d'enregistrement lisible par ordinateur stockant le programme de détermination selon la revendication 8.
